(19) Europäisches Patentamt
European Patent Office
Office européen des brevets

(11) **EP 3 840 411 A1**

(12) **EUROPEAN PATENT APPLICATION**

(43) Date of publication:
**23.06.2021 Bulletin 2021/25**

(51) Int Cl.:
**H04R 25/00** *(2006.01)* **H04R 1/10** *(2006.01)*
**C08L 75/04** *(2006.01)*

(21) Application number: **19218042.0**

(22) Date of filing: **19.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Sonova AG**
**8712 Stäfa (CH)**

(72) Inventors:
• **GUNDE, Petra**
 **8050 Zürich (CH)**

• **SILBERZAHN, Konstantin**
 **8706 Meilen (CH)**
• **KARASU KILIC, Feyza**
 **1004 Lausanne (CH)**
• **WEDER, Christoph**
 **3186 Düdingen (CH)**

(74) Representative: **Liedtke & Partner Patentanwälte**
**Gerhart-Hauptmann-Straße 10/11**
**99096 Erfurt (DE)**

Remarks:
Amended claims in accordance with Rule 137(2) EPC.

(54) **EARPIECE FOR A HEARING DEVICE**

(57) The invention relates to an earpiece (1) for a hearing device, comprising:
- a first part (2) comprising a first material wherein the first part is a hollow shapeable part (2) adapted to be inserted into an ear canal of a user,
- a second part (3) comprising a second material, the second part arranged on an end of the shapeable part (2) or at least partially embedded therein.

FIG 1

**Description**

Technical Field

The invention relates to an earpiece for a hearing device.

Background of the Invention

Earpieces for in-situ customization made of a shape memory material should have a design that allows the acousticians to drill vents, e.g. one straight surface, or should provide a pre-defined hole/ vent, which could be increased in size if needed. Acousticians need the opportunity to provide the client with a defined vent.

There remains a need for an improved earpiece for a hearing device.

Summary of the Invention

It is an object of the present invention to provide an improved earpiece for a hearing device.

The object is achieved by an earpiece for a hearing device according to claim 1.

Preferred embodiments of the invention are given in the dependent claims.

According to the invention, an earpiece for a hearing device comprises:

- a first part comprising a first material, wherein the first part is a hollow shapeable part adapted to be inserted into an ear canal of a user,
- a second part comprising a second material, the second part arranged on an end of the first part or at least partially embedded therein.

In an exemplary embodiment, the second material has a shore A hardness of at least 50. In an exemplary embodiment, the first material is different from the second material, in particular it has a lower shore A hardness, so the second material is more rigid than the first material.

In an exemplary embodiment, the first material is a shape memory polymer.

In an exemplary embodiment, the earpiece further comprises at least one vent opening in the second part.

In an exemplary embodiment, the earpiece further comprises a connector opening in the second part for a connector adapted to connect to a component of a hearing aid.

In an exemplary embodiment, the first part is conical.

In an exemplary embodiment, the first part comprises tapering walls with a thickness increasing towards a lateral end. The lateral end is the end pointing outwards, i.e. away from the user of the earpiece when the earpiece is in place within the users ear canal.

In an exemplary embodiment, the second part has a circular or oval cross section.

In an exemplary embodiment, the oval cross section has a minor semi-axis smaller than 2.5 mm and a major semi-axis smaller than 3mm.

In an exemplary embodiment, the vent opening comprises a tubular extension so that the length of the vent opening exceeds a thickness of the second part.

In an exemplary embodiment, the vent opening has a length of 0.5mm to 12mm, in particular 0.5 mm to 2.5mm and a diameter of 0.3mm to 2 mm, in particular 0.3 mm to 1.5mm.

In an exemplary embodiment, the vent opening has a circular, oval or crescent shaped cross section.

In an exemplary embodiment, the second material is at least one of a metal, a ceramic and a polymer, in particular a polyurethane, a thermoplastic polyurethane, a thermoplastic elastomer or a polyamide.

In an exemplary embodiment, the second part further comprises a third material different than the first and second material.

In an exemplary embodiment, the earpiece further comprises a connector arranged in the connector hole, the connector made from the second material or from a third material. In an exemplary embodiment, the third material may have a shore A hardness lower than the shore A hardness of the second material.

In an exemplary embodiment, the first material and the second material are both the same shape memory polymer, wherein the thickness of the second part is greater than the thickness of walls of the first part.

In an exemplary embodiment, the second part is overmolded with the shape memory polymer.

According to an aspect of the invention, a method of manufacturing an earpiece as described above is provided, wherein the second part and the first part are joined by at least one of a two-component molding process, gluing and laser welding.

The present invention provides a solution for the above stated problem. In short, the new earpiece design comprises a first part, e.g. a shell, which can be customized to an individual ear canal geometry, and a second medial part, which does not or only marginally change its shape during the in-situ customization process. In the second part, a connector (e.g. to connect with a component of a hearing aid such as a receiver or a sound tube) and one or more vents (if needed) may be integrated.

The first part of the earpiece may be made of a shape memory polymer (SMP), which allows for in-situ customization in the ear canal. It shall be provided in different sizes in order to fit a great range of ears. Due to the conicity of the first part the walls thereof can be tapered, i.e. they can be thinner at the medial end and become thicker towards a lateral end. In addition, the wall thickness can differ for different sizes of the earpiece, e.g. three different sizes.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Brief Description of the Drawings

The present invention will become more fully understood from the detailed description given hereinbelow and the accompanying drawings which are given by way of illustration only, and thus, are not limiting the present invention, and wherein:

Figure 1       is a schematic side view of an exemplary first embodiment of an earpiece,

Figure 2       is a schematic top view of the first embodiment of the earpiece,

Figure 3       is a schematic top view of an exemplary second embodiment of an earpiece,

Figure 4       is a schematic top view of an exemplary third embodiment of an earpiece,

Figure 5       is a schematic top view of an exemplary fourth embodiment of an earpiece,

Figure 6       is a schematic sectional view of a second part of the fourth embodiment of the earpiece,

Figure 7       is a schematic top view of an exemplary fifth embodiment of an earpiece,

Figure 8       is a schematic top view of an exemplary sixth embodiment of an earpiece,

Figure 9       is a schematic top view of an exemplary seventh embodiment of an earpiece, and

Figure 10      is a schematic side view of an exemplary sixth embodiment of an earpiece.

Corresponding parts are marked with the same reference symbols in all figures.

Detailed Description of Preferred Embodiments

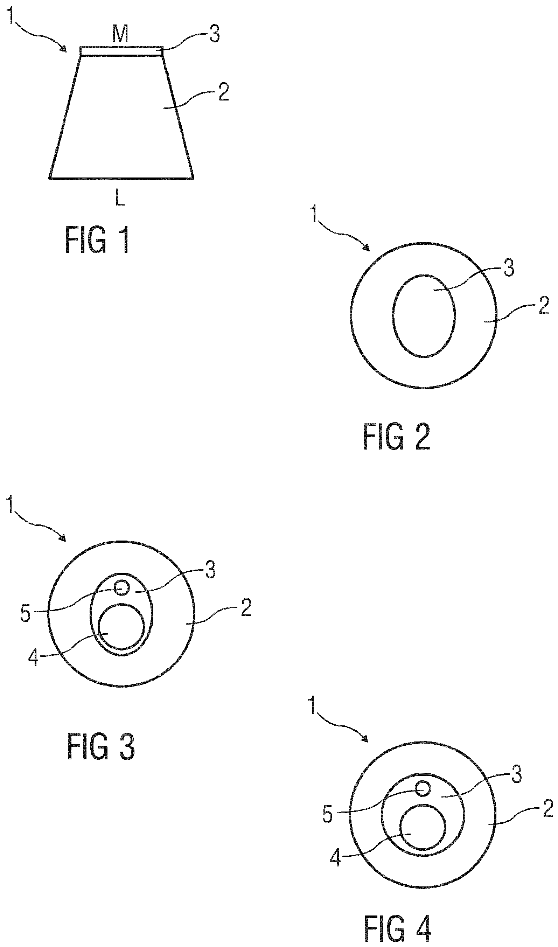

**Figure 1** is a schematic side view of an exemplary first embodiment of an earpiece 1. **Figure 2** is a schematic top view of the first embodiment of the earpiece 1. The earpiece 1 comprises a first part 2, e.g. a shell, which can be customized to an individual ear canal geometry, and a second part 3, e.g. a medial part, which does not or only marginally change its shape during an in-situ customization process.

The first part 2 of the earpiece 1 may be made of a shape memory polymer (SMP), which allows for in-situ customization in the ear canal. It may be provided in different sizes in order to fit a great range of ears. The first part 2 may have a conical form, so the walls thereof can be tapered, i.e. they can be thinner at a medial end M and become thicker towards a lateral end L. In addition, the wall thickness can differ for different sizes of the earpiece 1, e.g. three different sizes.

In an exemplary embodiment, the second part 3 has an oval cross sectional form. In other exemplary embodiments, the second part 3 may have a different cross sectional form, e.g. circular.

**Figure 3** is a schematic top view of an exemplary second embodiment of an earpiece 1 which differs from the earpiece 1 of the first embodiment in that a connector opening 4, e.g. to connect with a component of a hearing aid such as a receiver or a sound tube, and one or more vent openings 5, e.g. respectively having a circular cross section, are integrated in the second part 3. The connector opening 4 may typically be significantly larger in diameter than the one or more vent openings 5. The connector opening 4 may have a circular cross section.

**Figure 4** is a schematic top view of an exemplary third embodiment of an earpiece 1 which differs from the earpiece 1 of the second embodiment in that the second part 3 has a circular cross sectional form. The connector opening 4 is off center to provide space for the vent opening 5.

In figures 3 and 4 the second part 3 comprises the connector opening 4 for attaching a component of a hearing aid such as a receiver or a sound tube for connecting to a receiver. Moreover, the second part 3 has space to drill one or more vent openings 5 or features pre-manufactured vent openings 5. The second part 3 shall be as large as needed to accommodate the connector opening 4 and the one or more vent openings 5 and as small as possible in order to allow for a high fit rate. The second part 3 shall have the same size for all earpiece 1 sizes, but can also be larger for the larger earpiece 1 sizes. In an exemplary embodiment, the oval second part 3 of figure 3 features a minor semi-axis smaller than 2.5 mm and a major semi-axis smaller than 3mm. Due to the connector and receiver limiting space in the earpiece 1, the vent openings 5 shall ideally be integrated in the second part 3. To calculate a vent mass of a standard vent opening 5 (e.g. with a length of approximately 12 mm and a diameter of 1.4 mm) a simplified equation (see equation (1) below) can be used where the vent mass is proportional to the length of the vent opening 5 and inversely proportional to the cross section of the vent opening 5. For short vents openings 5, i.e. the vent openings 5 are integrated in the second part 3, the length of the vent opening 5 must be corrected with a term dL as shown in equation (2) below. For calculation of the resistance of the vent opening 5, which is used for the calculation of the vent mass VM, the following two simplified formulas can be used for standard and thin vent openings 5 with a round, e.g. circular, cross section:

$$VM = L/A \qquad\qquad (1)$$

where: VM=vent mass, L=length of the vent opening 5, A=cross sectional area of the vent opening

$$VM = (L+dL)/A \qquad\qquad (2)$$

where dL=0.6*D, D=diameter of the vent opening 5

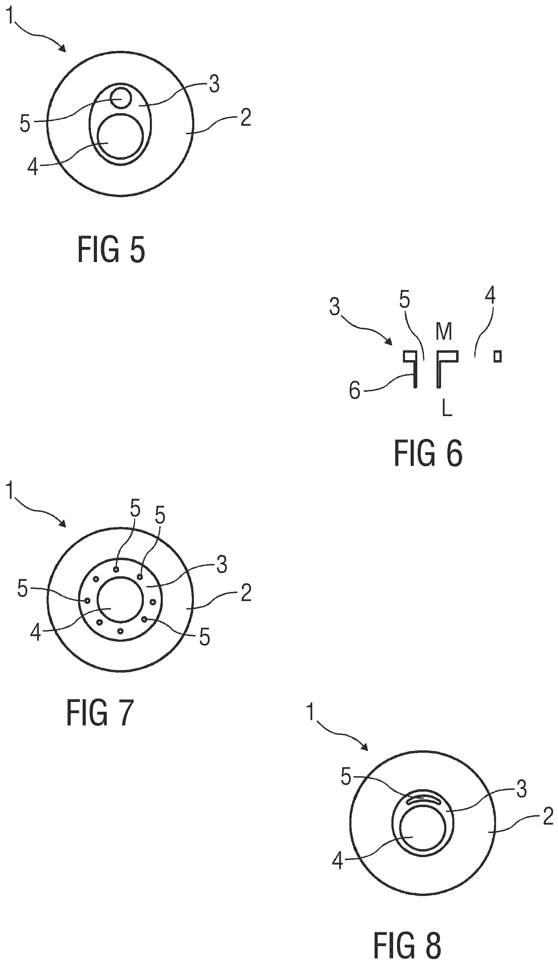

Based on the above equation 1, the vent mass for different sizes of vent openings 5 of standard earpieces 1 (e.g. slim tips) as suggested by Phonak's fitting software "Target" was calculated (see Table 1). These (approximate) results for the vent mass and equation 2 were taken to calculate the respective vent diameters for the shape memory polymer earpieces 1 according to the invention for vent lengths of 1.5 and 1 mm, respectively, which corresponds to the thickness of the second part 3, as shown in Table 2. In short, the range of vent diameters is between 0.2 and 1 mm, ideally between 0.31 mm and 0.8 mm. A drawback of these short and small vent openings 5 is that the manufacturing tolerances have a larger impact on the acoustic performance of the earpiece 1 than with larger vent openings 5. Consequently, in one design approach a slightly longer (e.g. 3 mm or 5 mm) and larger vent opening 5 may be integrated in the second part (see schematic in Figure 5).

**Figure 5** is a schematic top view of an exemplary fourth embodiment of an earpiece 1, which differs from the second embodiment in that the vent opening 5 is slightly longer (e.g. 3 mm or 5 mm) and larger. **Figure 6** is a schematic sectional view of the second part 3 of the fourth embodiment of the earpiece 1. It will be appreciated that the vent opening 5 comprises a tubular extension 6 so that the length of the vent opening 5 exceeds a thickness of the second part 3. The tubular extension 6 may consist of the same material as the second part 3 and may be integrally formed with the second part 3.

**Table 1: Vent masses calculated for different sizes of vent openings 5 of standard earpieces (e.g. slim tips)**

| Standard | | | |
|---|---|---|---|
| L | 12 | 12 | 12 |
| D | 1.4 | 1 | 2 |
| A | 1.54 | 0.79 | 3.14 |
| **VM** | **7.80** | **15.28** | **3.82** |

**Table 2: Diameters calculated for the thin vent openings 5 of shape memory polymer earpieces 1 with vent masses similar to those of the standard earpieces**

| SMP | | | | |
|---|---|---|---|---|
| L | 1.5 | 1.5 | 1.5 | 1 |
| **D** | **0.55** | **0.375** | **0.8** | **0.31** |
| A | 0.24 | 0.11 | 0.50 | 0.08 |
| dL | 0.33 | 0.225 | 0.48 | 0.186 |
| VM | 7.70 | 15.62 | 3.94 | 15.71 |

**Figure 7** is a schematic top view of an exemplary fifth embodiment of an earpiece 1 which differs from the third embodiment in that the connector opening 4 is in the centre of the second part 3 and a plurality of vent openings 5 having circular cross sections are arranged around the connector opening 4, e.g. uniformly distributed around the connector opening 4.

**Figure 8** is a schematic top view of an exemplary sixth embodiment of an earpiece 1 similar to the second and fourth embodiment because of the oval cross section of the second part 3; however, it differs from these embodiments in that the vent opening 5 does not have a circular cross section but a crescent shaped cross section. The curvature of the crescent shape may be at least approximately concentric with the connector opening 4. This may have an advantageous impact on the size of the second part 3 as the crescent shape allows for arranging the connector opening 4 less off centre.

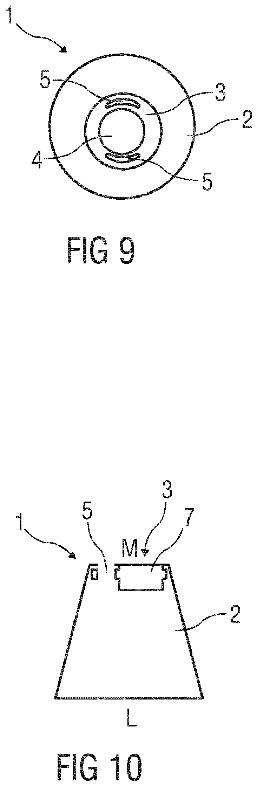

**Figure 9** is a schematic top view of an exemplary seventh embodiment of an earpiece which is similar to the sixth embodiment but has two vent openings 5 respectively having a crescent shaped cross section. The curvature of the crescent shape may be at least approximately concentric with the connector opening 4 and the vent openings 5 may be arranged on opposite sides of the connector opening 4.

Various options exist for the material and manufacturing of the second part 3 and the entire earpiece 1. Generally, the earpiece 1 is made of at least two different materials, i.e. one for the second part 3 and one for the first part 2. Further, an additional material can be used for the second part 3. The parts can be joined in different ways, e.g. via a two-component-molding process, by gluing or laser welding.

Strong adhesion between the first part 2, e.g. made out of a shape memory polymer, and the second part 3 containing the vent opening 5 according to this invention and a connector opening 5 or the connector itself, is desirable, especially if a two-component-molding process is applied. Qualitative adhesion experiments between the shape memory polymer and different materials (see Table 3) were thus performed in order to test the adhesion of various connector materials with a preferred shape memory polymer (e.g. a segmented poly(ester urethane), as described in ACS Appl. Mater. Interfaces 2018, 10, 24829-24839 and PCT/EP2019/058567). All materials were compression molded into 250 $\mu$m thin films at the processing temperature recommended for the prospective connector material by the supplier (150 °C to 220 °C), cut into strips having a width of approximately 1 cm, and the following procedures were applied.

(i) Hot-cold adhesion: Except for Tecoflex SG 80A, the shape memory polymer strips were heated on a hot stage to 180 °C. The films made from the prospective connector materials listed in Table 3 were brought into contact with the melted shape memory polymer to create lap joints with an overlap area of approximately 1 cm$^2$. Gentle pressure was applied to provide good interfacial contact, before the lap joints thus created were removed from the hot stage and allowed to cool to ambient temperature. In the case of Tecoflex SG 80A, the process was changed; here the Tecoflex SG80A strip was heated on a hot stage to 150 °C and the shape memory polymer film was brought into contact with the melted Tecoflex strip and the lap joints were finished as outlined above. The lap joints thus produced were stretched in order to test the adhesion between the two strips. Efficient adhesion was observed for lap joints made with the shape memory polymer and the polyurethanes (PU, TPU) without observing any delamination at the interphase except for Texin 270 and Desmopan 3072 D, which both have a relatively high shore hardness. Complete delamination was observed between the shape memory polymer and polyamides or TPE based materials.

(ii) Hot-hot adhesion: Both the shape memory polymer strips and the strips made from the prospective connector materials listed in Table 3 were placed in a hot press, brought into contact to create lap joints with an overlap area of approximately 1 cm$^2$, and the assemblies were pressed for 45 s at 1 bar and 150 °C (Tecoflex SG 80A), 180 °C (all other polymers) and in the case of Nylon 6.12 also 220 °C. The lap joints thus created were removed from the press and allowed to cool to ambient temperature. Efficient adhesion was achieved between the shape memory polymer and the TPUs and the PAs. However, cohesive failure of the shape memory polymer attached to Nylon 12 was observed when the sample stretched. TPE based For-Tec E was delaminated from the shape memory polymer and cohesive failure of Thermolast K TC3 PAN occurred, which has low shore hardness, when the sample stretched.

**Table 3: The commercial names, types and shore hardnesses of the materials used for adhesion trials**

| Name | Type* | Shore Hardness |
|---|---|---|
| Tecoflex SG 80A | PU | 72A |
| Elastollan 1185 A 10000 | TPU | 83A |
| Texin 285 | TPU | 85A |
| Pellethane 2103 | TPU | 92A |
| Texin 270 | TPU | 95A |
| Desmopan DP 3072 D | TPU | 98A |
| For-Tec E mid gray | TPE | 60A |
| Thermolast K TC3 PAN nature | TPE | 29A |
| Nylon 12 | PA | 100A |
| Nylon 6.12 | PA | - |
| *PU:Polyurethane, TPU:Thermoplastic polyurethane, PA:Polyamide, TPE:Thermoplastic elastomer | | |

According to the results of these experiments, some material and manufacturing options are listed, based on the assumption that especially the hot-hot adhesion tests allow to predict the outcome of a two-component-molding process:

(i) the connector and the second part 3 are made from the same material (e.g. a TPU with a hardness of 65-85 Shore A) and as one part, and the shell/first part 2 made of the shape memory polymer is thermally bonded with this assembly.

(ii) the connector is made of a rather soft material (e.g. a TPU with a hardness of 68 Shore A), the second part 3 is made of another harder TPU (e.g. with a hardness of 85 Shore A) and the first part 2 is made of the shape memory polymer.

(iii) the connector is made of a rather soft material (e.g. a TPU with a hardness of 68 Shore A), the second part 3 and the first part 2 are made of the shape memory polymer, but the second part 3 features a greater wall thickness to avoid deformation of the material during in-situ customization. In this set-up, a plug could be used to keep the vent opening 5 open during in-situ customization which can be removed afterwards.

(iv) the second part 3 consists of two components: one component features the connector 7 and a plate with the vent openings 5 and is made of a rather soft material (e.g. a TPU with a hardness of 68 Shore A). This component is overmolded with the shape memory polymer and at the same time the first part 2 is also molded (see Figure 10).

**Figure 10** is a schematic side view of an exemplary sixth embodiment of an earpiece 1. The earpiece 1 comprises a first part 2, e.g. a shell, which can be customized to an individual ear canal geometry, and a second part 3, e.g. a medial part, which does not or only marginally change its shape during an in-situ customization process.

The first part 2 of the earpiece 1 may be made of a shape memory polymer (SMP), which allows for in-situ customization in the ear canal. It may be provided in different sizes in order to fit a great range of ears. The shapeable part 2 may have a conical form, so the walls thereof can be tapered, i.e. they can be thinner at a medial end M and become thicker towards a lateral end L. In addition, the wall thickness can differ for different sizes of the earpiece 1, e.g. three different sizes. In an exemplary embodiment, the second part 3 has an oval cross sectional form. In other exemplary embodiments, the second part 3 may have a different cross sectional form, e.g. circular.

The second part 3 consists of two components: one component features the connector 7 and a plate with the vent openings 5 and is made of a rather soft material (e.g. a TPU with a hardness of 68 Shore A). This component is overmolded with the shape memory polymer and at the same time the first part 2 is also molded.

The vent openings 5 (see above for the various options of the vent openings 5) can either be incorporated during the injection molding/ manufacturing process, or afterwards, either in the manufacturing facility (pre-drilled holes) or at the acoustician (in the case of circular vent openings 5).

Another option to modify the size of vent openings 5 or to get rid of them is the use of plugs with defined sizes. Depending on the vent opening 5 size needed the respective plug can be mounted on the earpiece 1.

List of References

1   earpiece
2   first part
3   second part
4   connector opening
5   vent opening
6   tubular extension
7   connector
L   lateral end
M   medial end

**Claims**

1.  An earpiece (1) for a hearing device, comprising:

    - a first part (2) comprising a first material wherein the first part is a hollow shapeable part adapted to be inserted into an ear of a user,
    - a second part (3) comprising a second material, the second part arranged on an end of the first part (2) or at least partially embedded therein.

2.  The earpiece (1) of claim 1, wherein the first material is a shape memory polymer.

3.  The earpiece (1) of claim 1 or 2, wherein the second material has a shore A hardness of at least 50.

4.  The earpiece (1) according to any one of the preceding claims, further comprising at least one vent opening (5) in the second part (3) and/or a connector opening (4) in the second part (3) for a connector (7) adapted to connect to a component of a hearing aid.

5.  The earpiece (1) according to any one of the preceding claims, wherein the first part (2) is conical and/or wherein the first part (2) comprises tapering walls with a thickness increasing towards a lateral end (L).

6.  The earpiece (1) according to any one of the preceding claims, wherein the second part (3) has a circular or oval cross section, in particular the oval cross section having a minor semi-axis smaller than 2.5 mm and a major semi-axis smaller than 3mm.

7.  The earpiece (1) according to any one of the claims 4 to 6, wherein the vent opening (5) comprises a tubular extension (6) so that the length of the vent opening (5) exceeds a thickness of the second part (3).

8.  The earpiece according to any one of the claims 4 to 7, wherein the vent opening (5) has a length of 0.5mm to 12mm and a diameter of 0.3mm to 2mm.

9.  The earpiece (1) according to any one of the claims 4 to 8, wherein the vent opening (5) has a circular, oval or crescent shaped cross section.

10. The earpiece (1) according to any one of the preceding claims, wherein the second material is at least one of a metal, a ceramic and a polymer, in particular a polyurethane, a thermoplastic polyurethane or a polyamide.

11. The earpiece (1) according to any one of the preceding claims, wherein the second part (3) further comprises a third material different than the first and second material.

**12.** The earpiece (1) according to any one of the claims 4 to 11, further comprising a connector (7) arranged in the connector opening (4), the connector (7) made from the second material or from a third material.

**13.** The earpiece (1) according to any one of the claims 4 to 12, wherein the first material and the second material are both the same shape memory polymer, wherein the thickness of the second part (3) is greater than the thickness of walls of the first part (2).

**14.** The earpiece (1) according to any one of the claims 3 to 13, wherein the second part (3) is overmolded with the shape memory polymer.

**15.** A method of manufacturing an earpiece (1) according to any one of the preceding claims, wherein the second part (3) and the first part (2) are joined by at least one of a two-component molding process, gluing and laser welding.

Amended claims in accordance with Rule 137(2) EPC.

**1.** An earpiece (1) for a hearing device, comprising:

- a first part (2) comprising a first material wherein the first part is a hollow shapeable shell adapted to be inserted into an ear of a user, wherein the shell is customizable to an individual ear canal geometry, wherein the first material is a shape memory polymer,
- a medial second part (3) comprising a second material, the second part arranged on an end of the first part (2) or at least partially embedded therein, wherein the second part (3) is configured to not or only marginally change its shape during an in-situ customization process,
- at least one vent opening (5) in the second part (3) and/or a connector opening (4) in the second part (3) for a connector (7) adapted to connect to a component of a hearing aid.

**2.** The earpiece (1) of claim 1, wherein the second material has a shore A hardness of at least 50.

**3.** The earpiece (1) according to any one of the preceding claims, wherein the first part (2) is conical and/or wherein the first part (2) comprises tapering walls with a thickness increasing towards a lateral end (L).

**4.** The earpiece (1) according to any one of the preceding claims, wherein the second part (3) has a circular or oval cross section, in particular the oval cross section having a minor semi-axis smaller than 2.5 mm and a major semi-axis smaller than 3mm.

**5.** The earpiece (1) according to any one of the preceding claims, wherein the vent opening (5) comprises a tubular extension (6) so that the length of the vent opening (5) exceeds a thickness of the second part (3).

**6.** The earpiece according to any one of the preceding claims, wherein the vent opening (5) has a length of 0.5mm to 12mm and a diameter of 0.3mm to 2mm.

**7.** The earpiece (1) according to any one of the preceding claims, wherein the vent opening (5) has a circular, oval or crescent shaped cross section.

**8.** The earpiece (1) according to any one of the preceding claims, wherein the second material is at least one of a metal, a ceramic and a polymer, in particular a polyurethane, a thermoplastic polyurethane or a polyamide.

**9.** The earpiece (1) according to any one of the preceding claims, wherein the second part (3) further comprises a third material different than the first and second material.

**10.** The earpiece (1) according to any one of the preceding claims, further comprising a connector (7) arranged in the connector opening (4), the connector (7) made from the second material or from a third material.

**11.** The earpiece (1) according to any one of the preceding claims, wherein the first material and the second material are both the same shape memory polymer, wherein the thickness of the second part (3) is greater than the thickness of walls of the first part (2).

**12.** The earpiece (1) according to any one of the preceding claims, wherein the second part (3) is overmolded with the shape memory polymer.

13. A method of manufacturing an earpiece (1) according to any one of the preceding claims, wherein the second part (3) and the first part (2) are joined by at least one of a two-component molding process, gluing and laser welding.

FIG 1

FIG 2

FIG 3

FIG 4

FIG 5

FIG 6

FIG 7

FIG 8

FIG 9

FIG 10

Europäisches
Patentamt

European
Patent Office

Office européen
des brevets

# EUROPEAN SEARCH REPORT

Application Number

EP 19 21 8042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/183613 A1 (JUNEAU ROGER P [US] ET AL) 9 August 2007 (2007-08-09) | 1,3-9, 12,14,15 | INV. H04R25/00 |
| Y | * paragraph [0097] - paragraph [0122]; figures 2, 5, 8, 16, 17, 23, 26, 27, 31 * | 2,10,11, 13 | ADD. H04R1/10 |
| | ----- | | C08L75/04 |
| Y | WO 2018/099562 A1 (SONOVA AG [CH]) 7 June 2018 (2018-06-07) * page 24, line 20 - page 40, line 6; figures 2a, 2b, 7d * | 2,10,11 | |
| | ----- | | |
| A | US 2018/359579 A1 (SHEN DANIEL [US] ET AL) 13 December 2018 (2018-12-13) * page 6, paragraph 112 - page 11, paragraph 160; figures 9, 14, 24A, 27C * | 1-15 | |
| | ----- | | |
| Y | JP 2012 075850 A (SASAKI MITSUYO) 19 April 2012 (2012-04-19) * the whole document * | 13 | |
| | ----- | | |

TECHNICAL FIELDS
SEARCHED (IPC)

H04R
C08G
C08L

The present search report has been drawn up for all claims

| Place of search | Date of completion of the search | Examiner |
|---|---|---|
| Munich | 17 June 2020 | Duffner, Orla |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 8042

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2020

| Patent document cited in search report | | Publication date | Patent family member(s) | | Publication date |
|---|---|---|---|---|---|
| US 2007183613 | A1 | 09-08-2007 | NONE | | |
| WO 2018099562 | A1 | 07-06-2018 | CN | 110169086 A | 23-08-2019 |
| | | | EP | 3520440 A1 | 07-08-2019 |
| | | | US | 2020029161 A1 | 23-01-2020 |
| | | | WO | 2018099562 A1 | 07-06-2018 |
| US 2018359579 | A1 | 13-12-2018 | NONE | | |
| JP 2012075850 | A | 19-04-2012 | NONE | | |

EPO FORM P0459

For more details about this annex : see Official Journal of the European Patent Office, No. 12/82

## REFERENCES CITED IN THE DESCRIPTION

**Patent documents cited in the description**

- EP 2019058567 W

**Non-patent literature cited in the description**

- *ACS Appl. Mater. Interfaces,* 2018, vol. 10, 24829-24839